Europäisches Patentamt

European Patent Office

Office européen des brevets

(19)

(11) Veröffentlichungsnummer: **0 095 064**
**B1**

(12) **EUROPÄISCHE PATENTSCHRIFT**

(45) Veröffentlichungstag der Patentschrift: **26.09.90**

(21) Anmeldenummer: **83104352.6**

(22) Anmeldetag: **03.05.83**

(51) Int. Cl.⁵: **G 01 P 3/489,** G 01 D 5/248

(54) Impulsgeberschaltung zur Erzeugung von Stellsignalen zur Änderung einer elektrischen Grösse.

(30) Priorität: **14.05.82 DE 3218276**

(43) Veröffentlichungstag der Anmeldung:
**30.11.83 Patentblatt 83/48**

(45) Bekanntmachung des Hinweises auf die
Patenterteilung:
**26.09.90 Patentblatt 90/39**

(84) Benannte Vertragsstaaten:
**BE DE FR GB IT**

(56) Entgegenhaltungen:
**DE-A-2 902 944**
**DE-A-2 932 564**
**DE-A-3 027 660**
**FR-A-2 268 395**
**US-A-4 203 063**
**US-A-4 281 415**

(73) Patentinhaber: **Siemens Aktiengesellschaft**
**Wittelsbacherplatz 2**
**D-8000 München 2 (DE)**

(72) Erfinder: **Fischer, Helmut, Ing. grad.**
**Am Fohlengarten 12d**
**D-8042 Oberschleissheim (DE)**

EP 0 095 064 B1

Courier Press, Leamington Spa, England.

## Beschreibung

Die Erfindung bezieht sich auf eine Impulsschaltung zur Erzeugung von Stellsignalen zur Änderung einer elektrischen Größe mit einem drehbaren Einstellrad, das an zwei Ausgängen bei einer Drehung pro Drehwinkeländerung digitale Ausgangsimpulse abgibt, aus deren Impulsfrequenz das Stellsignal herleitbar ist, mit einer dem Einstellrad nachgeschalteten Multiplizierschaltung mit einem ersten Zähler, der an seinem Zähleingang mit den Ausgangsimpulsen des Einstellrads und an einem Toreingang mit dem Ausgangssignal einer ersten Torschaltung beaufschlagt ist, wobei aus der Anzahl der Impulse, die während der mittels der Torschaltung über den Toreingang vorgegebenen Torzeit am Zähleingang anliegen, ein Multiplikator als Änderungsfaktor zur Vervielfachung des Zählerstandes des ersten Zählers und somit zur Vervielfachung der Ausgangsimpulse des Einstellrades herleitbar ist, und mit einem Hauptzähler, der zur Herleitung des Stellsignales aus den mit dem Mutliplikator beaufschlagten Ausgangsimpulsen des Einstellrades an den Ausgang der Multiplizierschaltung angeschlossen ist.

Bei einer bekannten Impulsgeberschaltung dieser Art (US—PS—4 281 415) ist dem ersten Zähler der Multiplizierschaltung eine Steuereinrichtung vorgeordnet, die als Torschaltung dafür sorgt, daß für vorgegebene Zeitintervalle die Ausgangsimpulse des Einstellrades von dem ersten Zähler gezählt werden. Der erste Zähler is dabei nur mit einem Ausgang des Einstellrades verbunden.

Bei einer anderen bekannten Impulsgeberschaltung (DE—OS—30 27 660) wird zunächst eine Messung der Drehgeschwindigkeit derart vorgenommen, daß daraus ein zahlenmäßiger Faktor für die Multiplikation der vom Einstellrad abgegebenen Frequenz errechnet werden kann. Außerdem kann die Größe des Faktors noch von einer Bereichsumschaltung abhängig gemacht werden. Der während des Zählintervalls ermittelte Wert wird hierbei von einem Codewandler zunächst in eine binäre Größe umgewandelt, die dann zusammen mit den von der Bereichsumschaltung abgegebenen Signalen bei der Bildung des Ausgangssignals rechnerisch berücksichtigt wird.

Bei einer weiteren bekannten Impulsgeberschaltung (DE—AS—29 32 564) werden die Ausgangsimpulse des Einstellrades mit einem Periodendauerzähler ausgewertet. Mit dem Ausgangssignal des Periodendauerzählers wird aus einem Festwertspeicher eine jeweils für einen Bereich der Periodendauer gespeicherte Größe abgerufen, die einen programmierbaren Frequenzteiler derart steuert, daß der Teilerfaktor des Frequenzteilers verändert wird. Mit dem Frequenzteiler wird die Taktfrequenz eines Taktgebers derart verändert, daß sich eine von der Umdrehungsgeschwindigkeit des Einstellrades abhängige Taktfrequenz des Stellsignals am Ausgang der Impulsgeberschaltung ergibt. Das Stellsignal weist hierbei eine für bestimmte Bereiche der Umdrehungsgeschwindigkeit des Einstellrades gestufte Takfrequenz auf.

Der Erfindung liegt die Aufgabe zugrunde, eine Impulsgeberschaltung zu schaffen, bei der mit geringem Schaltungsaufwand eine überproportionale Abhängigkeit des Stellsignals der Impulsgeberschaltung von der Umdrehungsgeschwindigkeit des Einstellrades der Impulsgeberschaltung erreicht wird.

Diese Aufgabe wird erfindungsgemäß dadurch gelöst, daß der erste Zähler über eine Verdopplerschaltung mit den Ausgangsimpulsen des Einstellrades beaufschlagt ist, daß die erste Torschaltung eine monostabile Kippstufe ist und mit ihrem Eingang über die Verdopplerschaltung mit den Ausgangsimpulsen des Einstellrades beaufschlagt ist und daß ein zweites (komplementäres) Ausgangssignal der ersten, als monostabile Kippstufe ausgeführten Torschaltung auf einen Rücksetzeingang des ersten Zählers geführt ist.

Ein wesentlicher Vorteil der erfindungsgemäßen Impulsgeberschaltung besteht darin, daß bei ihr die von der ersten Torschaltung definierte Torzeit mit einem Ausgangsimpuls des Einstellrades beginnt, so daß auch bei kleinen Drehgeschwindigkeiten des Einstellrades das Stellsignal exakt einstellbar ist. Zu der guten Auflösung trägt zusätzlich die Verdopplerschaltung bei.

Weitere vorteilhafte Ausgestaltungen der erfindungsgemäßen Impulsgeberschaltung sind in den abhängigen Ansprüchen gekennzeichnet.

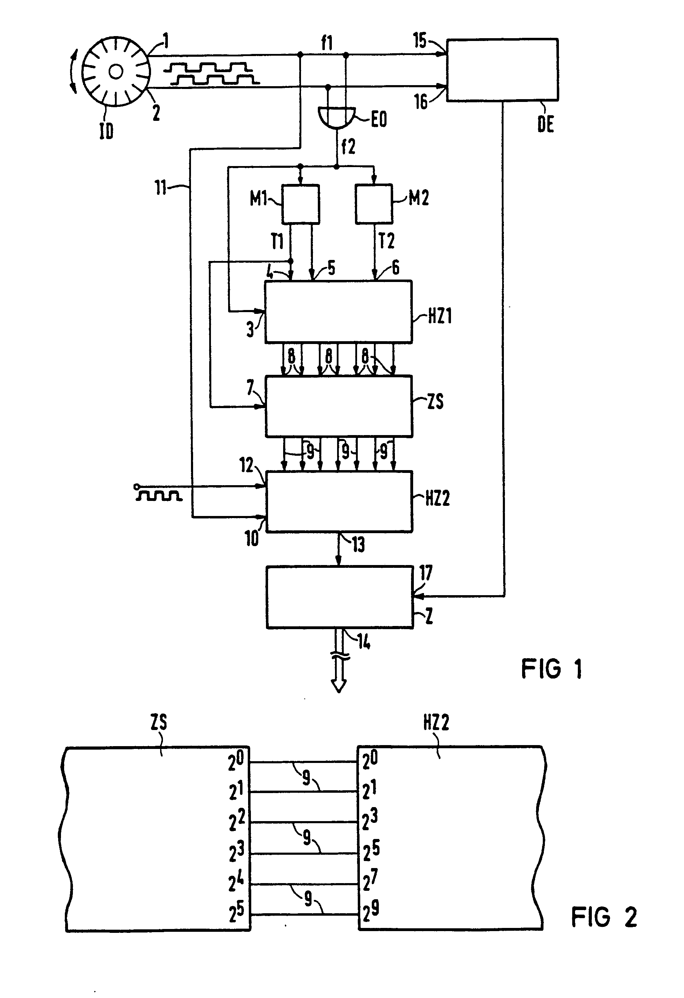

Die Erfindung wird anhand der Figuren erläutert, wobei Figur 1 ein Blockschaltbild eines Ausführungsbeispiels der erfindungsgemäßen Impulsgeberschaltung und Figur 2 ein Detailschaltbild der Verbindung des Zwischenspeichers mit dem zweiten Zähler der Impulsgeberschaltung darstellt.

Bei der in der Figur 1 dargestellten Impulsgeberschaltung ist ein Einstellrad ID vorhanden, das an Ausgängen 1 und 2 zwei um 90° phasenverschobene Ausgangsimpulse abgibt, deren Impulszahl von dem mit dem Einstellrad ID überstrichenen Drehwinkel abhängt. Die von der Drehgeschwindigkeit abhängige Impulsfrequenz beträgt hier f1. Die beiden phasenverschobenen Ausgangsimpulse werden auf Eingänge einer Verdopplerschaltung EO, die hier als Exklusiv-ODER-Schaltung ausgeführt ist, geleitet. Am Ausgang der Verdopplerschaltung EO steht somit die Impulsfrequenz f2 an, die der doppelten Impulsfrequenz f1 entspricht.

Der Ausgang der Verdopplerschaltung EO ist mit Eingängen einer ersten Torschaltung M1 und einer zweiten Torschaltung M2 sowie mit dem Zähleingang 3 eines ersten Zählers HZ1 verbunden. Ein Toreingang 4 des ersten Zählers HZ1 ist mit einem Ausgang der ersten Torschaltung M1 verbunden; ein Rücksetzeingang 5 des ersten Zählers HZ1 ist mit einem weiteren, zum ersten Ausgang komplementären Ausgang der ersten Torschaltung M1 verbunden; ein Rücksetzeingang 6 des ersten Zählers HZ1 ist mit dem Ausgang der zweiten Torschaltung M2 verbunden. Der eine Ausgang der ersten Torschaltung M1 ist auf einen Eingang 7 eines Zwischenspeichers ZS geführt, dessen Speichereigänge 8 mit den Zählerstandsausgängen des ersten Zählers HZ1 verbunden sind. Die den Speicherplätzen zugeordneten Speicherausgänge 9 des Zwischenspeichers ZS sind mit Zählerstandseingängen eines zweiten Zählers HZ2 verbunden. Der zeite Zähler HZ2 bekommt Startimpulse an einem Starteingang 10 über eine Verbindungsleitung 11 von den Ausgangsimpulsen des Einstellrades ID. Der Takt des zweiten Zählers HZ2 wird über einen Takteingang 12 mittels vorgegebener Taktimpulse gesteuert. Der Ausgang des zweiten Zählers HZ2 ist auf den Eingang des Hauptzählers Z geführt, der den Zählerstand des zweiten Zählers HZ2 derart auswertet, daß daraus am Ausgang 13 des Hauptzählers Z die der gewünschten Frequenzänderung entsprechende Größe ansteht; der Ausgang 13 stellt gleichzeitig den Ausgang der Impulsgeberschaltung dar.

In der Detaildarstellung nach der Figur 2 ist die Verbindung des Zwischenspeichers ZS mit dem zweiten Zähler HZ2 dargestellt. Die Verbindungsleitungen 9 des Zwischenspeichers ZS sind hier z. T. mit höherwertigeren Eingängen des zweiten Zählers HZ2 verbunden.

Die Ausgänge 1 und 2 des Einstellrades ID sind ebenfalls auf einen Clock- und einen Dateneingang eines als Drehrichtungserkennungseinrichtung DE ausgeführten Daten-Flip-Flops gegeben, dessen Ausgang auf einen weiteren Eingang 14 des Hauptzählers Z geführt ist.

Die Funktionsweise der erfindungsgemäßen Funktionsgeberschaltung wird anhand der Figuren erläutert. Die vom überstrichenen Drehwinkel des Einstellrades ID abhängigen Ausgangsimpulse an den Ausgängen 1 und 2 des Einstellrades ID sind beim dargestellten Blockschaltbild beispielsweise so zusammengestzt, daß sich 20 Impulse pro Umdrehung des Einstellrades ID ergeben. Durch die Verdopplerschaltung EO liegen an den Eingängen der Torschaltungen M1 und M2 sowie am Zähleingang 3 des ersten Zählers HZ1 Impulse mit der doppelten Impulsfrequenz an. Die erste Torschaltung M1 stellt dem ersten Zähler am Toreingang 4 ein Signal zur Verfügung, das eine erste Torzeit (z. B. 100 ms) definiert. Gleichzeitig wird mittels der zweiten Torschaltung M2 eine etwas längere zweite Torzeit festgelegt, und es wird für den Fall, daß innerhalb der ersten Torzeit (100 ms) kein Ausgangsimpuls mittels des Einstellrades ID erzeugt worden ist, nach Ablauf der ersten Torzeit durch Beeinflussung des Rücksetzeinganges 6 des ersten Zählers mittels der zweiten Torschaltung M2 ein Zählerstand Eins im ersten Zähler HZ1 festgelegt. Für den Fall, daß während des Verlaufs der ersten Torzeit T1 vom Einstellrad ID Impulse erzeugt werden, werden diese mit dem ersten Zähler HZ1 gezählt und liegen als Zählerstand an den Ausgängen dieses ersten Zählers HZ1 an. Nach Ablauf der ersten Torzeit T1 wird dieser Zählerstand an den Eingängen 8 des Zwischenspeichers ZS in diesem Zwischenspeicher gespeichert.

Bei dem in der Figur 2 dargestellten Beispiel einer Verbindung des Zwischenspeichers ZS mit dem zweiten Zähler HZ2 führen "1"-Signale an den entsprechenden Ausgängen $2^0$ bis $2^5$ zu "1"-Signalen an den entsprechenden Eingängen ($2^0$ bis $2^9$) des zweiten Zählers HZ2; somit kann der Zählerstand des ersten Zählers HZ1 durch eine wählbare Anschlußbelegung — die auch beliebig anders gewählt sein kann — im zweiten Zähler HZ2 zu einem erhöhten Zählerstand führen.

Bei jedem Ausgangsimpuls des Einstellrades ID wird der Zählerstand des zweiten Zählers HZ2 über die Verbindungsleitungen 9 auf den im Zwischenspeicher ZS gespeicherten Speicherinhalt gesetzt, wobei nunmehr dieser Zählerstand mit dem am Takteingang 12 anliegenden Takt abwärts bis Null gezählt wird. Die über die Verbindungsleitung 11 am Eingang 10 des zweiten Zählers HZ2 anliegende Impulsfrequenz f1 wird somit jeweils mit dem Speicherinhalt des Zwischenspeichers ZS multipliziert und über einen Ausgang 13 des zweiten Zählers HZ2 dem Hauptzähler Z zugeführt. Der Takt am Takteingang 12 muß hierbei eine Taktfrequenz aufweisen, die mindestens um den höchstmöglichen Speicherinhalt des Zwischenspeichers ZS (als Multiplikator) größer ist als die Impulsfrequenz f1 des Einstellrades ID.

Aus der von der Drehrichtung des Einstellrades ID abhängigen Reihenfolge der beiden Ausgangsimpulse an den Ausgängen 1 und 2 des Einstellrades wird mittels der Drehrichtungserkennungseinrichtung ein Signal erzeugt, das am weiteren Eingang 17 des Hauptzählers Z anliegt und den Hauptzähler Z derart steuert, daß an seinem Ausgang 14 ein Signal zu einer Erniedrigung oder einer Erhöhung der Frequenz anliegt. Diese am Ausgang 14 des Hauptzählers Z anliegende Größe stellt die Frequenz "Einstellinformation" für ein nachgeschaltetes Meßgerät dar, das somit in der Lage ist, abhängig von der Betätigung des Einstellrades ID, eine gewünscht Frequenz zu erzeugen. Anschließend sind in einer Tabelle die Zusammenhänge zwischen verschiedenen Drehwinkeländerungen des Einstellrades ID, den Zählerständen der beiden Zähler und dem Ausgangssignal der Impulsgeberschaltung aufgelistet. Hierbei ist festgelegt, daß pro Umdrehung des Einstellrades ID 20 Impulse abgegeben werden und die Torzeit T1 der ersten Torschaltung M1 100 ms sowie die Torzeit T2 der zweiten Torschaltung M2 150 ms beträgt.

| Drehzahl (1/s) (Drehwinkelzänderung von ID) | f1 (Hz) | f2 (Hz) | Zählerstand HZ1 = f2·T1 (abgerundet) | Zählerstand HZ2 bei Eingabe = (Multiplikator) | Verstellsignal = f1·(Multiplikator) |
|---|---|---|---|---|---|
| 0,05 | 1 | 2 | 1 | 1 | 1 |
| 0,15 | 3 | 6 | 1 | 1 | 3 |
| 0,3 | 6 | 12 | 1 | 1 | 6 |
| 0,6 | 12 | 24 | 2 | 2 | 24 |
| 1,2 | 24 | 48 | 4 | 8 | 192 |
| 2,1 | 42 | 84 | 8 | 32 | 1.344 |
| 4 | 80 | 160 | 16 | 128 | 10.240 |
| 8 | 160 | 320 | 32 | 512 | 81.920 |
| 12 | 240 | 480 | 48 | 640 | 153.600 |

## Patentansprüche

1. Impulsgeberschaltung zur Erzeugung von Stellsignalen zur Änderung einer elektrischen Größe mit
a) einem drehbaren Einstellrad (ID), das
a1) an zwei Ausgängen bei einer Drehung pro Drehwinkeländerugn digitale Ausgangsimpulse abgibt, aus deren Impulsfrequenz das Stellsignal herleitbar ist, mit
b) einer dem Einstellrad (ID) nachgeschalteten Multiplizierschaltung mit einem ersten Zähler (HZ1), der
b1) an seinem Zähleingang mit den Ausgangsimpulsen des Einstellrades (ID) und
b2) an einem Toreingang mit dem Ausgangssignal einer ersten Torschaltung (M1) beaufschlagt ist, wobei
b3) aus der Anzahl der Impulse, die während der mittels der Torschaltung (M1) über den Toreingang (4) vorgegebenen Torzeit (T1) am Zähleingang (3) anliegen, ein Multiplikator als Änderungsfaktor zur Verveilfachung des Zählerstandes des ersten Zählers (HZ1) und somit zur Verveilfachung der Ausgangsimpulse des Einstellrades (ID) herlietbar ist, und mit
c) einem Hauptzähler (Z), der zur Herleitung des Stellsignales aus den mit dem Multiplikator beaufschlagten Ausgangsimpulsen des Einstellrades (ID)
c1) an den Ausgang der Multiplizierschaltung angeschlossen ist
dadurch gekennzeichnet, daß
b4) der erste Zähler über eine Verdopplerschaltung (EO) mit den Ausgangsimpulsen des Einstellrades (ID) beaufschlagt ist, daß
d) die erste Torschaltung (M1) eine monostabile Kippstufe ist und mit ihrem Eingang über die Verdopplerschaltung (EO) mit den Ausgangsimpulsen des Einstellrades (ID) beaufschlagt ist und daß
e) ein zweites, komplementäres, Ausgangssignal der ersten, als monostabile Kippstufe ausgeführten Torschaltung (M1) auf einen Rücksetzeingang (5) des ersten Zählers (HZ1) geführt ist.
2. Impulsgeberschaltung nach Anspruch 1, dadurch gekennzeichnet, daß
f) eine zweite, als monostabile Kippstufe ausgeführte Torschaltung (M2) vorhanden ist, die
f1) an ihrem Eingang über die Verdopplerschaltung (EO) mit den Ausgangsimpulsen des Einstellrades (ID) beaufschlagt ist und mit ihrem Ausgang auf einen Setzeingang (6) des ersten Zählers (HZ1) geführt ist, wobei
g) die Torzeit der zweiten Torschaltung (M2) größer ist als die der ersten Torschaltung (M1) und durch die zweite Torschaltung (M2) bewirkt wird, daß für den Fall, daß im Verlauf der Torzeit (T1) der ersten Torschaltung (M1) die Ausgangsimpulse des Einstellrades (ID) unter einer vorgegebenen Grenze liegen, der Zählerstand des ersten Zählers (HZ1) auf Eins gesetzt wird.
3. Impulsgeberschaltung nach Anspruch 1 oder 2, dadurch gekennzeichnet, daß
h) der erste Zähler (HZ1) mit einem Zwischenspeicher (ZS) verbunden ist, in dem der nach Ablauf der Torzeit (T1) der ersten Torschaltung vorhandene Zählerstand dieses Zählers (HZ1) bzw. der Zählerstand Eins gespeichert ist,
i) ein zweiter Zähler (HZ2) mit dem Ausgang des Zwischenspeichers (ZS) verbunden ist und an einem Starteingang (10) mit den Ausgangsimpulsen des Einstellrades (ID) und an einem Takteingang (12) mit einem vorgegebenen Taktsignal beaufschlagt ist, dessen Taktfrequenz mindestens um den

EP 0 095 064 B1

höchstmöglichen Speicherinhalt des Zwischenspeichers (ZS) größer als die größte auftretende Pulsfrequenz des Einstellrades (ID) ist, und daß

j) der Ausgang (13) des zweiten Zählers (HZ2) mit dem Eingang des Hauptzählers (Z) verbunden ist.

4. Impulsgeberschaltung nach einem der vorhergehenden Ansprüche, dadurch gekennzeichnet, daß

k) beide Ausgänge des Einstellrades (ID) mit zwei Eingängen einer Exklusiv-ODER-Schaltung als Verdopplerschaltung (EO) verbunden sind und daß

l) beide Ausgänge (1, 2) des Einstellrades (ID) mit Eingängen (15, 16) einer als Daten-Flip-Flop ausgeführten Drehrichtungserkennungseinrichtung (DE) verbunden sind, die mit ihrem Ausgang auf einen weiteren Eingang (17) des Hauptzählers (z) geführt ist.

**Revendications**

1. Circuit générateur d'impulsions pour la production de signaux de réglage pour modifier une grandeur électrique, comportant

a) une roue tournante de réglage (ID), qui

a1) délivre sur deux sorties, au cours d'une rotation, pour chaque variation de l'angle de rotation, des impulsions de sortie numériques à partir de la fréquence desquelles peut être obtenu le signal de réglage,

b) un circuit multiplicateur branché en aval de la roue de réglage (ID) et comportant un premier compteur (HZ1), qui

b1) peut être chargé, au niveau de son entrée de comptage, par des impulsions de sortie de la roue de réglage (ID), et

b2) est chargé, au niveau d'une entrée pour un signal de porte, par le signal de sortie d'un premier circuit de porte (M1),

b3) un multiplicateur formant facteur de modification pour la multiplication de l'état de comptage du premier compteur (HZ1) et par conséquent pour la multiplication des impulsions de sortie de la roue de réglage (ID) pouvant être obtenu à partir du nombre des impulsions, qui sont appliquées à l'entrée de comptage (3) pendant un temps de transit (T1) de la porte, prédéterminé au moyen du circuit de porte (MA) par l'intermédiaire de l'entrée (4) du signal de porte, et

c) un compteur principal (Z), qui, pour l'obtention du signal de réglage à partir des impulsions de sortie, chargées par le multiplicateur, de la roue de réglage (ID),

c1) est raccordé à la sortie du circuit multiplicateur, caractérisé par le fait que

b4) le premier compteur est chargé, par l'intermédiaire d'un circuit doubleur (EO), par les impulsions de sortie de la roue de réglage (ID),

d) le premier circuit de porte (M1) est un étage à bascule monostable et est chargé, au niveau de son entrée, par l'intermédiaire du circuit doubleur (EO), par les impulsions de sortie de la roue de réglage (ID), et

e) un signal de sortie complémentaire du premier circuit de porte (M1) réalisé sous la forme d'un étage à bascule monostable est appliqué à une entrée de remise à zéro (5) du premier compteur (HZ1).

2. Circuit générateur d'impulsions suivant la revendication 1, caractérisé par le fait que

f) il est prévu un second circuit de porte (M2) réalisé sous la forme d'un étage à bascule monostable, qui

f1) est chargé, au niveau de son entrée, par l'intermédiaire du circuit doubleur (EO), par les impulsions de sortie de la roue de réglage (ID) et est raccordé, par sa sortie, à une entrée de positionnement (6) du premier compteur (HZ1),

g) le temps de transit dans le second circuit de porte (M2) étant supérieur au temps de transit dans le premier circuit de porte (M1) et étant produit par le second circuit de porte (M1) de manière que, dans le cas où les impulsions de sortie de la roue de réglage (ID) sont inférieures à une limite prédéterminée, pendant le temps de transit (T1) dans le premier circuit de porte (M1), l'état de comptage du premier compteur (HZ2) est réglé sur un.

3. Circuit générateur d'impulsions suivant la revendication 1 ou 2, caractérisé par le fait que

h) le premier compteur (HZ1) est relié à une mémoire intermédiaire (ZS), dans laquelle l'état de comptage de ce compteur (HZ1), qui est présent après l'écoulement du temps de transit (T1) dans le premier circuit de porte, l'état de comptage un est mémorisé,

i) un second compteur (HZ2) est relié à la sortie de la mémoire intermédiaire (ZS) et est chargé, au niveau d'une entrée de démarrage (10), par les impulsions de sortie de la roue de réglage (ID) et, au niveau d'une entrée de cadence (12), par un signal de cadence prédéterminé, dont la fréquence de cadence est supérieure, au moins du contenu maximal possible de la mémoire intermédiaire (ZS), à la fréquence maximale, qui apparaît, des impulsions de la roue individuelle (ID), et

j) la sortie (13) du second compteur (HZ2) est reliée à l'entrée du compteur principal (Z).

4. Circuit générateur d'impulsions suivant l'une des revendications précédentes, caractérisé par le fait que

k) les deux sorties de la roue de réglage (ID) sont reliées à deux entrées d'un circuit OU-Exclusif formant circuit doubleur (EO), et que

l) les deux sorties (1, 2) et la roue de réglage (ID) sont reliées à des entrées (15, 16) d'un dispositif (DE) d'identification du sens de rotation, qui est réalisé sous la forme d'une bascule bistable de transfert de données et dont la sortie est reliée à une autre entrée (17) du compteur principal (z).

5

## Claims

1. Pulse generator circuit for the production of actuating signals to change an electrical value, with
   a) a rotatable adjustment wheel (ID) which
   a1) at two outputs with a rotation per change of angle of rotation emits digital output pulses, from the pulse frequency of which the actuating signal can be derived, with
   b) a multiplying circuit subsequently connected to the adjustment wheel (ID) with a first counter (HZ1) which
   b1) at its counting input is loaded with the output pulses of the adjustment wheel (ID) and
   b2) at a stage input is loaded with the output signal of a first gate circuit (M1), whereby
   b3) from the number of pulses which rest at the counting input (3) during the gate time (T1) predetermined by means of the gate circuit (M1) over the gate input (4), a multiplicator can be derived as change factor for the multiplication of the count of the first counter (HZ1) and thus for the multiplication of the output pulses of the adjustment wheel (ID), and with
   c) a main counter (Z) which, for the derivation of the actuating signal from the output pulses of the adjustment wheel (ID) loaded with the multiplicator,
   c1) is attached to the output of the multiplying circuit,
   characterized in that
   b4) the first counter is loaded by means of a doubler circuit (EO) with the output pulses of the adjustment wheel (ID), in that
   d) the first gate circuit (M1) is a monostable tilting stage and with its input by means of the doubler circuit (EO) is loaded with the output pulses of the adjustment wheel (ID), and in that
   e) a second, complementary output signal of the first gate circuit (M1) constructed as monostable tilting stage is conducted onto a reset input (5) of the first counter (HZ1).

2. Pulse generator circuit according to claim 1, characterized in that
   f) a second gate circuit (M2) is present, constructed as monostable tilting stage, which
   f1) at its input by means of the doubler circuit (EO) is loaded with the output pulses of the adjustment wheel (ID) and with its output is conducted onto a set input (6) of the first counter (HZ1), whereby
   g) the gate time of the second gate circuit (M2) is greater than that of the first gate circuit (M1) and is effected by means of the second gate circuit (M2), in that in the case when in the course of the gate time (T1) of the first gate circuit (M1) the output pulses of the adjustment wheel (ID) lie below a predetermined limit, the count of the first counter (HZ1) is set at one.

3. Pulse generator circuit according to claim 1 or 2, characterized in that
   h) the first counter (HZ1) is connected to an intermediate store (ZS), in which, after the expiration of the gate time (T1) of the first gate circuit, the present count of this counter (HZ1) or the count one is stored,
   i) a second counter (HZ2) is connected to the output of the intermediate store (ZS) and at a starting input (10) is loaded with the output pulses of the adjustment wheel (ID) and at a clock input (12) is loaded with a predetermined clock signal, the clock frequency of which is greater than the greatest occurring pulse frequency of the adjustment wheel (ID) by at least the highest possible storage content of the intermediate store (ZS), and in that
   j) the output (13) of the second counter (HZ2) is connected to the input of the main counter (Z).

4. Pulse generator circuit according to one of the preceding claims, characterized in that
   k) the two outputs of the adjustment wheel (ID) are connected to two inputs of an exclusive-OR circuit as doubler circuit (EO) and in that
   l) the two outputs (1, 2) of the adjustment wheel (ID) are connected to inputs (15, 16) of an apparatus recognizing the direction of rotation (DE), constructed as data flipflop, which apparatus is conducted with its output onto a further input (17) of the main counter (z).

FIG 1

FIG 2